# EUROPÄISCHE PATENTANMELDUNG

(11) **EP 4 822 396 A1**
(43) Veröffentlichungstag der Anmeldung: **14.10.2026**
(21) Anmeldenummer: 26168900.4
(22) Anmeldetag: 30.03.2026
(51) Int. Cl.: G01S 17/36, G01S 7/497, G01S 7/4911

(54) **VERFAHREN ZUM PRÜFEN EINES REGELWERTES IM RAHMEN EINER REGELUNG EINES TECHNISCHEN SYSTEMS**

(30) Priorität: 11.04.2025 DE 102025114322
(71) Anmelder: Robert Bosch GmbH, 70442 Stuttgart (DE)
(72) Erfinder: Noe, Stefan, 70563 Stuttgart (DE)

(57) **Zusammenfassung**

Die Erfindung betrifft ein Verfahren (100) zum Prüfen eines Regelwertes im Rahmen einer Regelung eines technischen Systems (1), umfassend die nachfolgenden Schritte:
- Bereitstellen (101) des Regelwertes durch eine erste Komponente des technischen Systems (1),
- Berechnen (102) einer ersten Prüfsumme auf Basis des Regelwertes durch die erste Komponente,
- Übertragen (103) des Regelwertes und der ersten Prüfsumme an eine zweite Komponente des technischen Systems (1),
- Berechnen (104) einer zweiten Prüfsumme auf Basis des übertragenen Regelwertes durch die zweite Komponente,
- Prüfen (105) des Regelwertes auf Basis eines Vergleichs der ersten Prüfsumme mit der zweiten Prüfsumme durch die zweite Komponente.

Ferner betrifft die Erfindung ein Laser-Entfernungsmessgerät, ein Computerprogramm sowie ein Speichermedium zu diesem Zweck.

## Beschreibung

Die Erfindung betrifft ein Verfahren zum Prüfen eines Regelwertes im Rahmen einer Regelung eines technischen Systems. Ferner betrifft die Erfindung ein Laser-Entfernungsmessgerät, ein Computerprogramm sowie ein Speichermedium zu diesem Zweck.

### Stand der Technik

Digitale oder Software-Regelungen können periodisch digitale Werte einlesen und ausgeben, um eine Schleife über einer Regelstrecke zu schließen. Sofern die Daten innerhalb eines geschlossenen Systems ausgetauscht werden, z. B. in einem Prozessor, sind sie gegen Störungen weitgehend geschützt, und die Fehlerhäufigkeit kann mittels MTTFd, d.h. einer mittleren Zeit bis zum gefährlichen (dangerous) Ausfall, abgeschätzt werden.

Im Beispiel einer Laserregelung in einem Laser-Entfernungsmessgerät misst und steuert ein Prozessor Spannungen mit integriertem Analog-Digital-Wandler und Digital-Analog-Wandler. Die Regelsoftware läuft insbesondere im Prozessor.

Ein Nachteil von aktuellen Systemarchitekturen sind insbesondere die analogen Schnittstellen für die Mess- und Stellgrößen. Im Rahmen einer Übertragung über die Schnittstellen können Fehler auftreten, die schlimmstenfalls unbemerkt in gefährliche Steuersignale für eine Laserdiode des Laser-Entfernungsmessgeräts umgesetzt werden könnten.

### Offenbarung der Erfindung

Gegenstand der Erfindung ist ein Verfahren mit den Merkmalen des Anspruchs 1, ein Computerprogramm mit den Merkmalen des Anspruchs 8, ein Laser-Entfernungsmessgerät mit den Merkmalen des Anspruchs 9 sowie ein computerlesbares Speichermedium mit den Merkmalen des Anspruchs 10. Weitere Merkmale und Details der Erfindung ergeben sich aus den jeweiligen Unteransprüchen, der Beschreibung und den Zeichnungen. Dabei gelten Merkmale und Details, die im Zusammenhang mit dem erfindungsgemäßen Verfahren beschrieben sind, selbstverständlich auch im Zusammenhang mit dem erfindungsgemäßen Computerprogramm, dem erfindungsgemäßen Laser-Entfernungsmessgerät sowie dem erfindungsgemäßen computerlesbaren Speichermedium, und jeweils umgekehrt, so dass bezüglich der Offenbarung der Erfindung stets auch eine wechselseitige Bezugnahme möglich ist.

Gegenstand der Erfindung ist insbesondere ein Verfahren zum Prüfen eines Regelwertes im Rahmen einer Regelung eines technischen Systems, umfassend die nachfolgenden Schritte:
- Bereitstellen des Regelwertes durch eine erste Komponente, insbesondere eine Quelle des Regelwertes, des technischen Systems,
- Berechnen einer ersten Prüfsumme auf Basis des Regelwertes durch die erste Komponente,
- Übertragen des Regelwertes und der ersten Prüfsumme an eine zweite Komponente, insbesondere einen Empfänger des Regelwertes, des technischen Systems,
- Berechnen einer zweiten Prüfsumme auf Basis des übertragenen Regelwertes durch die zweite Komponente,
- Prüfen des Regelwertes auf Basis eines Vergleichs der ersten Prüfsumme mit der zweiten Prüfsumme durch die zweite Komponente.

Dadurch können Fehler in der Datenübertragung des Regelwertes zuverlässig erkannt werden und somit ein sicheres Funktionieren des technischen Systems gewährleistet werden. Die Verwendung von zwei Prüfsummen erhöht insbesondere die Sicherheit im Vergleich zu einzelnen Berechnungen. Dies kann zur funktionalen Sicherheit des technischen Systems beitragen und das Risiko von Fehlfunktionen minimieren, die zu Sicherheitsrisiken führen könnten.

Es ist ferner denkbar, dass das technische System ein Laser-Entfernungsmessgerät ist und zumindest eine Software-Regelschleife und/oder eine Hardware-Regelschleife umfasst, wobei im Rahmen der Regelung durch die Software-Regelschleife und/oder die Hardware-Regelschleife eine Laserdiode des Laser-Entfernungsmessgeräts geregelt wird.

Vorzugsweise kann vorgesehen sein, dass die Software-Regelschleife einen Analog-Digital-Wandler und einen Prozessor, insbesondere einen Mikroprozessor oder Mikrocontroller, umfasst, wobei die erste Komponente der Analog-Digital-Wandler ist und die zweite Komponente der Prozessor ist, wobei der Regelwert einem Messwert an der Laserdiode entspricht. Die Software-Regelschleife kann somit Messwerte erfassen und entsprechende Steuersignale an die Laserdiode senden. Der Analog-Digital-Wandler und Prozessor sind vorzugsweise in einer Nähe zu der Laserdiode angeordnet. Durch die Integration von Analog-Digital-Wandler und Prozessor in der Nähe der Laserdiode kann die Reaktionszeit des Laser-Entfernungsmessgeräts verbessert werden, was zu einer höheren Genauigkeit und Stabilität der Regelung führen kann.

Optional kann es vorgesehen sein, dass die Software-Regelschleife einen Digital-Analog-Wandler und einen (weiteren) oder den Prozessor umfasst, wobei die erste Komponente der Prozessor ist und die zweite Komponente der Digital-Analog-Wandler ist, wobei der Regelwert einem Stellwert für die Laserdiode entspricht.

Alternativ kann das Verfahren ferner die folgenden Schritte umfassen:
- Bereitstellen eines Stellwertes für die Laserdiode durch den Prozessor,
- Berechnen einer dritten Prüfsumme auf Basis des Stellwertes durch den Prozessor,
- Übertragen des Stellwertes und der dritten Prüfsumme an den Digital-Analog-Wandler,
- Berechnen einer vierten Prüfsumme auf Basis des übertragenen Stellwertes durch den Digital-Analog-Wandler,
- Prüfen des Stellwertes auf Basis eines Vergleichs der dritten Prüfsumme mit der vierten Prüfsumme durch den Digital-Analog-Wandler.

So kann vorteilhaft eine zusätzliche Erhöhung der Sicherheit durch die dritte und vierte Prüfsumme bereitgestellt werden.

Ferner kann es im Rahmen der Erfindung vorgesehen sein, dass die Hardware-Regelschleife einen oder den Prozessor, insbesondere Mikroprozessor oder Mikrocontroller, und eine anwendungsspezifische integrierte Schaltung umfasst, wobei die erste Komponente der Prozessor ist und die zweite Komponente die anwendungsspezifische integrierte Schaltung ist, wobei der Regelwert einem Sollwert für die Laserdiode entspricht.

Alternativ kann das Verfahren ferner die folgenden Schritte umfassen:
- Bereitstellen eines Sollwertes für die Laserdiode durch den Prozessor,
- Berechnen einer fünften Prüfsumme auf Basis des Sollwertes durch den Prozessor,
- Übertragen des Sollwertes und der fünften Prüfsumme an die anwendungsspezifische integrierte Schaltung,
- Berechnen einer sechsten Prüfsumme auf Basis des übertragenen Sollwertes durch die anwendungsspezifische integrierte Schaltung,
- Prüfen des Sollwertes auf Basis eines Vergleichs der fünften Prüfsumme mit der sechsten Prüfsumme durch die anwendungsspezifische integrierte Schaltung.

So kann vorteilhaft eine zusätzliche Erhöhung der Sicherheit durch die fünfte und sechste Prüfsumme bereitgestellt werden.

In einer weiteren Möglichkeit kann vorgesehen sein, dass das Verfahren, wenn das Prüfen des Regelwertes eine Ungleichheit zwischen der ersten Prüfsumme und der zweiten Prüfsumme indiziert und/oder wenn das Prüfen des Stellwertes eine Ungleichheit zwischen der dritten Prüfsumme und der vierten Prüfsumme indiziert und/oder wenn das Prüfen des Sollwertes eine Ungleichheit zwischen der fünften Prüfsumme und der sechsten Prüfsumme indiziert, ferner umfasst:
- Überführen des technischen Systems, vorzugsweise der Laserdiode des Laser-Entfernungsmessgeräts, in einen sicheren Zustand, insbesondere in einen ausgeschalteten Zustand.

In anderen Worten kann das Überführen in den sicheren Zustand bedeuten, dass die Laserdiode in einen ausgeschalteten Zustand oder in einen Zustand, in dem die Laserleistung ungefährlich für das menschliche Auge ist, überführt wird. Dies hat den Vorteil, dass das technische System bei erkannten Fehlern selbstständig reagieren und in einen sicheren Zustand übergehen kann. Dadurch kann eine Wahrscheinlichkeit von Schäden an Mensch oder Maschine oder fehlerhaften Messungen minimiert werden.

Vorteilhaft ist es darüber hinaus, wenn im Rahmen der Erfindung das Verfahren, wenn das Prüfen des Regelwertes eine Ungleichheit zwischen der ersten Prüfsumme und der zweiten Prüfsumme indiziert und/oder wenn das Prüfen des Stellwertes eine Ungleichheit zwischen der dritten Prüfsumme und der vierten Prüfsumme indiziert und/oder wenn das Prüfen des Sollwertes eine Ungleichheit zwischen der fünften Prüfsumme und der sechsten Prüfsumme indiziert, ferner umfasst:
- Initiieren einer Ausgabe, wobei die Ausgabe angibt, dass ein Fehler in dem technischen System oder in der Regelung des technischen Systems vorliegt.

Der Fehler kann beispielsweise ein falsch übertragener Wert sein. Z.B. könnte ein Messwert verloren gehen oder ein digitaler Wert verfälscht werden. Es ist somit möglich, dass das technische System mit der Ausgabe eine Warnanzeige ausgibt, wenn eine Ungleichheit zwischen den Prüfsummen festgestellt wird. Dadurch kann ein Benutzer vorteilhaft auf den Fehler aufmerksam gemacht werden, um entsprechende Maßnahmen wie eine Überprüfung und ggfs. eine Reparatur oder einen Austausch von Bauteilen durchzuführen.

Ebenfalls Gegenstand der Erfindung ist einen Laser-Entfernungsmessgerät, umfassend eine Software-Regelschleife und/oder eine Hardware-Regelschleife, wobei das Laser-Entfernungsmessgerät eingerichtet ist, das erfindungsgemäße Verfahren auszuführen. Damit bringt das erfindungsgemäße Laser-Entfernungsmessgerät die gleichen Vorteile mit sich, wie sie ausführlich mit Bezug auf das erfindungsgemäße Verfahren beschrieben wurden. Das Laser-Entfernungsmessgerät, bzw. die Software-Regelschleife und/oder die Hardware-Regelschleife können dabei eine Vorrichtung zur Datenverarbeitung umfassen, die eingerichtet ist, das erfindungsgemäße Verfahren auszuführen. Als die Vorrichtung kann bspw. wenigstens ein Computer, bzw. Mikrocomputer oder Prozessor oder integrierte Schaltung, vorgesehen sein, welcher das erfindungsgemäße Computerprogramm ausführt. Der Computer kann wenigstens einen Prozessor zur Ausführung des Computerprogramms aufweisen. Auch kann ein nicht-flüchtiger Datenspeicher vorgesehen sein, in welchem das Computerprogramm hinterlegt und von welchem das Computerprogramm durch den Prozessor zur Ausführung ausgelesen werden kann.

Ebenfalls Gegenstand der Erfindung ist ein Computerprogramm, insbesondere Computerprogrammprodukt, umfassend Befehle, die bei der Ausführung des Computerprogrammes durch wenigstens einen Computer diesen veranlassen, das erfindungsgemäße Verfahren auszuführen. Damit bringt das erfindungsgemäße Computerprogramm die gleichen Vorteile mit sich, wie sie ausführlich mit Bezug auf ein erfindungsgemäßes Verfahren beschrieben worden sind.

Ebenfalls Gegenstand der Erfindung kann ein computerlesbares Speichermedium sein, welches das erfindungsgemäße Computerprogramm aufweist und/oder Befehle umfasst, die bei der Ausführung durch wenigstens einen Computer diesen veranlassen, das erfindungsgemäße Verfahren auszuführen. Das Speichermedium ist bspw. als ein Datenspeicher wie eine Festplatte und/oder ein nicht-flüchtiger Speicher und/oder eine Speicherkarte ausgebildet. Das Speichermedium kann z. B. in den Computer integriert sein.

Darüber hinaus kann das erfindungsgemäße Verfahren auch als ein computerimplementiertes Verfahren ausgeführt sein. Alternativ oder zusätzlich kann zumindest einer der offenbarten Verfahrensschritte computer-implementiert sein und/oder automatisiert durchgeführt werden.

Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung im Einzelnen beschrieben sind. Dabei können die in den Ansprüchen und in der Beschreibung erwähnten Merkmale jeweils einzeln für sich oder in beliebiger Kombination erfindungswesentlich sein. Es zeigen:
- Fig. 1: eine schematische Darstellung eines Laser-Entfernungsmessgeräts gemäß Ausführungsbeispielen der Erfindung,
- Fig. 2: eine schematische Darstellung eines Laser-Entfernungsmessgeräts gemäß Ausführungsbeispielen der Erfindung,
- Fig. 3: eine schematische Visualisierung eines Verfahrens, einer Vorrichtung, eines Speichermediums sowie eines Computerprogramms gemäß Ausführungsbeispielen der Erfindung.

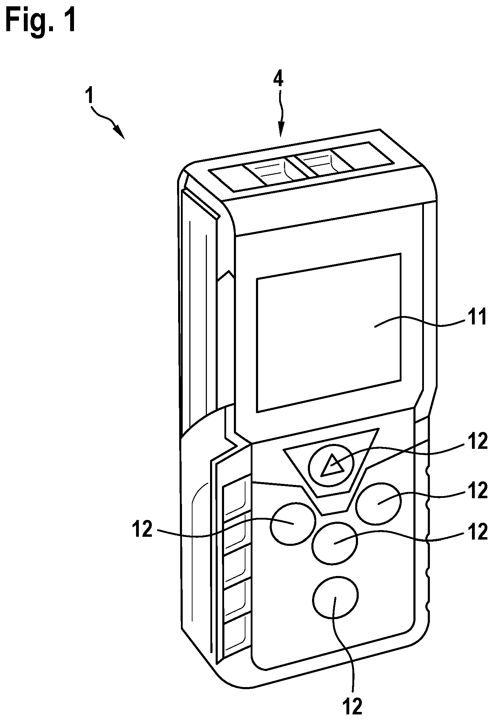

Fig. 1 zeigt eine schematische Darstellung eines Laser-Entfernungsmessgeräts 1 gemäß Ausführungsbeispielen der Erfindung. Dieses umfasst eine Laserdiode 4, ein Display 11 und mehrere Bedientasten 12.

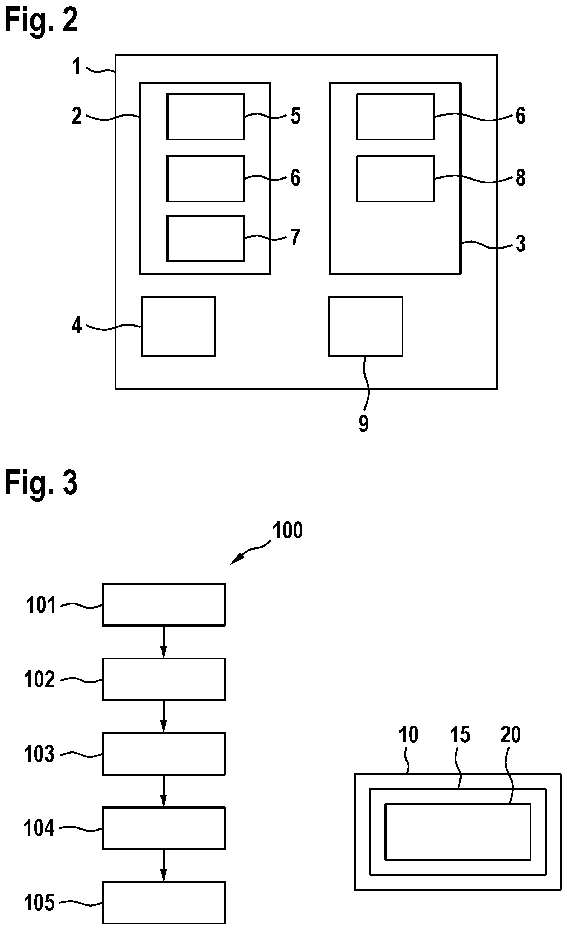

Fig. 2 zeigt eine weitere schematische Darstellung einer inneren Ausstattung des Laser-Entfernungsmessgeräts 1 gemäß Ausführungsbeispielen der Erfindung. Dieses umfasst eine Software-Regelschleife 2 und eine Hardware-Regelschleife 3. In der Software-Regelschleife 2 sind ein Analog-Digital-Wandler 5, ein Prozessor 6 und ein Digital-Analog-Wandler 7 vorgesehen. In der Hardware-Regelschleife 3 sind ein oder der Prozessor 6 und eine anwendungsspezifische integrierte Schaltung 8 vorgesehen. Ferner umfasst das Laser-Entfernungsmessgerät 1 eine Laserdiode 4 und einen Detektor 9.

Das Laser-Entfernungsmessgerät 1 gemäß der Erfindung verwendet insbesondere eine indirekte Time of Flight (iToF)-Messung. Das Laser-Entfernungsmessgerät 1 arbeitet beispielsweise mit einer Messung einer Phasenverschiebung eines modulierten Lichtsignals, das vom Laser-Entfernungsmessgerät 1 ausgesendet und von einem Zielobjekt reflektiert wird. Im Folgenden wird die Funktionsweise der indirekten Time of Flight (iToF)-Messung beschrieben. Zunächst kann die Laserdiode 4 im Laser-Entfernungsmessgerät 1 intensitätsmoduliertes Licht, beispielsweise im infraroten oder sichtbaren Bereich, in Richtung eines Zielobjekts senden. Die Modulation erfolgt insbesondere mit einer sinusförmigen oder Rechteckwelle. Das intensitätsmodulierte Licht trifft anschließend auf das Zielobjekt und wird zurück zum Laser-Entfernungsmessgerät 1 reflektiert. Der Detektor 9 im Laser-Entfernungsmessgerät 1 kann nun das reflektierte Licht empfangen. Da das Licht eine gewisse Zeit benötigt, um die Strecke hin und zurück zu legen, kommt es zu einer Phasenverschiebung zwischen dem ausgesendeten und dem empfangenen Signal. Diese Phasenverschiebung zwischen dem ausgesendeten und dem empfangenen Signal kann anschließend gemessen werden. Diese Phasenverschiebung ist insbesondere proportional zur zurückgelegten Entfernung des Lichts. Die Entfernung kann anschließend aus der Phasenverschiebung unter Berücksichtigung der Wellenlänge der Modulation und der Lichtgeschwindigkeit berechnet werden. Hierbei kann ferner vorgesehen sein, dass eine Referenzphase mit einem zweiten Detektor mit einem konstanten Abstand bestimmt wird (nicht dargestellt), um die Phasenverschiebung auf Basis eines Vergleiches mit der Referenzphase zu bestimmen.

Die Software-Regelschleife 2 und/oder die Hardware-Regelschleife 3 übernehmen insbesondere eine Laserregelung, d.h. beispielsweise eine Steuerung der Laserdiode 4 und/oder Datenübertragung. Der Prozessor 6 ist gemäß der Erfindung insbesondere für eine Abarbeitung einer Software, insbesondere der Algorithmen zur Laserregelung und -sicherheit, vorgesehen. Eine Hauptaufgabe der anwendungsspezifischen integrierten Schaltung 8 ist insbesondere eine Modulation und Phasenmessung des Laserlichts. Eine optionale Nebenaufgabe kann sein, eine analoge Schnittstelle zur Laserleistungsregelung (mittels ADC und DAC) bereitzustellen.

So kann eine Emission der Laserdiode 4 gesteuert werden, indem ein Ein- und Ausschalten sowie eine Intensität eines Laserstrahls der Laserdiode 4 geregelt wird. Dadurch kann sichergestellt werden, dass der Laserstrahl mit der richtigen Leistung und den richtigen Eigenschaften ausgesendet wird.

Nach dem Empfang eines Bruchteils des ausgesendeten Laserlichts durch den Detektor 9 kann das empfangene Signal verarbeitet werden. Dies umfasst beispielsweise eine Verstärkung, Filterung und Umwandlung des empfangenen analogen Signals in ein digitales Signal zur weiteren Analyse, insbesondere durch einen Analog-Digital-Wandler 5.

Ferner kann gemäß Ausführungsbeispielen der Erfindung die Phasenverschiebung zwischen dem ausgesendeten und dem empfangenen Signal messen und gegebenenfalls mit der Referenzphase verglichen werden.

Der Analog-Digital-Wandler 5 wandelt vorzugsweise analoge Signale, die vom Detektor 9 empfangen werden, in digitale Signale um, insbesondere eine Laser-Helligkeit als digitales Wort. Diese Signale repräsentieren insbesondere eine Lichtintensität, die von der Laserdiode 4 ausgesendet wird. Die digitalen Signale, die von dem jeweiligen Analog-Digital-Wandler 5 bereitgestellt werden, können weiter gefiltert, verstärkt und verarbeitet werden, um Rauschen zu reduzieren und die Signalqualität zu verbessern.

Ein Digital-Analog-Wandler 7 in dem Laser-System 1, bzw. Laser-Entfernungsmessgerät, hat insbesondere die Aufgabe, digitale Steuersignale in analoge Signale umzuwandeln. Diese analogen Signale können verwendet werden, um verschiedene Komponenten des Laser-Entfernungsmessgeräts 1, insbesondere die Laserdiode 4, präzise zu steuern. Der Digital-Analog-Wandler 7 erzeugt vorzugsweise analoge Spannungen oder Ströme, die benötigt werden, um die Laserdiode 4 zu betreiben. Diese Steuerung ist entscheidend für die Emission des Laserstrahls mit der gewünschten Intensität. Ferner kann der Digital-Analog-Wandler 7 digitale Rückmeldungen des Prozessors 6 in analoge Steuerungen umwandeln, um kontinuierlich die Leistung und Stabilität der Laserdiode 4 anzupassen.

Der Prozessor 6 generiert vorzugsweise digitale Signale basierend auf Anforderungen des Messprozesses und Rückmeldungen von Sensoren und anderen Komponenten. Diese digitalen Signale werden insbesondere an den Digital-Analog-Wandler 7 gesendet. Der Digital-Analog-Wandler 7 wandelt die empfangenen digitalen Signale vorzugsweise in analoge Spannungen oder Ströme um. Diese analogen Signale können dann verwendet werden, um die Laserdiode 4 zu steuern.

In Fig. 3 sind ein Verfahren 100, eine Vorrichtung 10, ein Speichermedium 15 sowie ein Computerprogramm 20 gemäß Ausführungsbeispielen der Erfindung schematisch dargestellt.

Fig. 3 zeigt insbesondere ein Ausführungsbeispiel für ein Verfahren zum Prüfen eines Regelwertes im Rahmen einer Regelung eines technischen Systems 1. In einem ersten Schritt 101 wird der Regelwert durch eine erste Komponente des technischen Systems 1 bereitgestellt. In einem zweiten Schritt 102 wird eine erste Prüfsumme auf Basis des Regelwertes durch die erste Komponente berechnet. In einem dritten Schritt 103 wird der Regelwert und die erste Prüfsumme an eine zweite Komponente des technischen Systems 1 übertragen. In einem vierten Schritt 104 wird eine zweite Prüfsumme auf Basis des übertragenen Regelwertes durch die zweite Komponente berechnet. In einem fünften Schritt 105 wird der Regelwert auf Basis eines Vergleichs der ersten Prüfsumme mit der zweiten Prüfsumme durch die zweite Komponente geprüft.

Mit dem Verfahren gemäß der Erfindung kann die Datenübertragung sicherheitsrelevanter Werte weiter gegen Fehler und/oder Manipulation abgesichert werden, um eine funktionale Sicherheit zu erhöhen.

Die Regelwerte, insbesondere Mess- und Stellgrößen, werden dafür vorzugsweise vor der Übertragung vom Sender, d.h. von der ersten Komponente, mit einer Prüfsumme (CRC) versehen. Wenn die Prüfsumme nicht zu den vom Empfänger, d.h. von der zweiten Komponente, empfangenen Nutzdaten passt, versetzt der Empfänger vorzugsweise das technische System 1, insbesondere die Laserdiode 4 des Laser-Entfernungsmessgeräts 1, in einen sicheren Zustand. Damit verringert sich beispielsweise eine Wahrscheinlichkeit eines sicherheitskritischen Übertragungsfehlers um die Zweierpotenz der Bitlänge (NCRC) der Prüfsumme (MTTFd×2NCRC).

In der Software-Regelschleife 2 könnte das Verfahren gemäß Ausführungsbeispielen der Erfindung wie folgt ablaufen. Der Analog-Digital-Wandler 5 berechnet beispielsweise eine Prüfsumme zum übertragenen Messwert. Der Prozessor 6 kann diese Prüfsumme kontrollieren. Stimmt sie nicht überein, bricht der Prozessor 6 die Regelung vorzugsweise ab und schaltet die Laserdiode 4 aus. Die Regelung berechnet anschließend vorzugsweise aus dem Analog-Digital-Wandler-Messwert einen neuen Digital-Analog-Wandler-Stellwert. Der Prozessor 6 berechnet nun vorzugsweise eine Prüfsumme zum übertragenen Stellwert. Der Digital-Analog-Wandler 7 kann diese Prüfsumme nun kontrollieren. Stimmt sie nicht überein, geht der Digital-Analog-Wandler 7 vorzugsweise in einen sicheren Zustand, d.h. die Laserdiode 4 wird vorzugsweise ausgeschaltet. Ferner kann eine Ausgabe initiiert werden, mit der ein Fehler angezeigt wird.

In der Hardware-Regelschleife 3 könnte das Verfahren gemäß Ausführungsbeispielen der Erfindung wie folgt angewendet werden. Der Prozessor 6 berechnet insbesondere eine Prüfsumme zum Sollwert der Regelung. Die anwendungsspezifische integrierte Schaltung 8 kontrolliert nun vorzugsweise diese Prüfsumme. Stimmt sie nicht überein, wird die Regelung beispielsweise abgebrochen und die Laserdiode 4 ausgeschaltet. Ferner kann eine Ausgabe initiiert werden, mit der ein Fehler angezeigt wird.

Die voranstehende Erläuterung der Ausführungsformen beschreibt die vorliegende Erfindung ausschließlich im Rahmen von Beispielen. Selbstverständlich können einzelne Merkmale der Ausführungsformen, sofern technisch sinnvoll, frei miteinander kombiniert werden, ohne den Rahmen der vorliegenden Erfindung zu verlassen.

## Patentansprüche

1. Verfahren (100) zum Prüfen eines Regelwertes im Rahmen einer Regelung eines technischen Systems (1), umfassend die nachfolgenden Schritte:
- Bereitstellen (101) des Regelwertes durch eine erste Komponente des technischen Systems (1),
- Berechnen (102) einer ersten Prüfsumme auf Basis des Regelwertes durch die erste Komponente,
- Übertragen (103) des Regelwertes und der ersten Prüfsumme an eine zweite Komponente des technischen Systems (1),
- Berechnen (104) einer zweiten Prüfsumme auf Basis des übertragenen Regelwertes durch die zweite Komponente,
- Prüfen (105) des Regelwertes auf Basis eines Vergleichs der ersten Prüfsumme mit der zweiten Prüfsumme durch die zweite Komponente.

2. Verfahren (100) nach Anspruch 1,
**dadurch gekennzeichnet,**
**dass** das technische System (1) ein Laser-Entfernungsmessgerät (1) ist und zumindest eine Software-Regelschleife (2) und/oder eine Hardware-Regelschleife (3) umfasst, wobei im Rahmen der Regelung durch die Software-Regelschleife (2) und/oder die Hardware-Regelschleife (3) eine Laserdiode (4) des Laser-Entfernungsmessgeräts (1) geregelt wird.

3. Verfahren (100) nach Anspruch 2,
**dadurch gekennzeichnet,**
**dass** die Software-Regelschleife (2) einen Analog-Digital-Wandler (5) und einen Prozessor (6) umfasst, wobei die erste Komponente der Analog-Digital-Wandler (5) ist und die zweite Komponente der Prozessor (6) ist, wobei der Regelwert einem Messwert an die Laserdiode (4) entspricht.

4. Verfahren (100) nach Anspruch 2 oder 3,
**dadurch gekennzeichnet,**
**dass** die Software-Regelschleife einen Digital-Analog-Wandler (7) und einen oder den Prozessor (6) umfasst,
wobei die erste Komponente der Prozessor (6) ist und die zweite Komponente der Digital-Analog-Wandler (7) ist, wobei der Regelwert einem Stellwert für die Laserdiode (4) entspricht, oder
wobei das Verfahren (100) ferner die folgenden Schritte umfasst:
- Bereitstellen eines Stellwertes für die Laserdiode (4) durch den Prozessor (6),
- Berechnen einer dritten Prüfsumme auf Basis des Stellwertes durch den Prozessor (6),
- Übertragen des Stellwertes und der dritten Prüfsumme an den Digital-Analog-Wandler (7),
- Berechnen einer vierten Prüfsumme auf Basis des übertragenen Stellwertes durch den Digital-Analog-Wandler (7),
- Prüfen des Stellwertes auf Basis eines Vergleichs der dritten Prüfsumme mit der vierten Prüfsumme durch den Digital-Analog-Wandler (7).

5. Verfahren (100) nach einem der Ansprüche 2 bis 4,
**dadurch gekennzeichnet,**
**dass** die Hardware-Regelschleife (3) einen oder den Prozessor (6) und eine anwendungsspezifische integrierte Schaltung (8) umfasst,
wobei die erste Komponente der Prozessor (6) ist und die zweite Komponente die anwendungsspezifische integrierte Schaltung (8) ist,
wobei der Regelwert einem Sollwert für die Laserdiode (4) entspricht, oder
wobei das Verfahren ferner die folgenden Schritte umfasst:
- Bereitstellen eines Sollwertes für die Laserdiode (4) durch den Prozessor (6),
- Berechnen einer fünften Prüfsumme auf Basis des Sollwertes durch den Prozessor (6),
- Übertragen des Sollwertes und der fünften Prüfsumme an die anwendungsspezifische integrierte Schaltung (8),
- Berechnen einer sechsten Prüfsumme auf Basis des übertragenen Sollwertes durch die anwendungsspezifische integrierte Schaltung (8),
- Prüfen des Sollwertes auf Basis eines Vergleichs der fünften Prüfsumme mit der sechsten Prüfsumme durch die anwendungsspezifische integrierte Schaltung (8).

6. Verfahren (100) nach einem der vorhergehenden Ansprüche,
**dadurch gekennzeichnet,**
**dass** das Verfahren (100), wenn das Prüfen (105) des Regelwertes eine Ungleichheit zwischen der ersten Prüfsumme und der zweiten Prüfsumme indiziert und/oder wenn das Prüfen des Stellwertes eine Ungleichheit zwischen der dritten Prüfsumme und der vierten Prüfsumme indiziert und/oder wenn das Prüfen des Sollwertes eine Ungleichheit zwischen der fünften Prüfsumme und der sechsten Prüfsumme indiziert, ferner umfasst:
- Überführen des technischen Systems (1), vorzugsweise der Laserdiode (4) des Laser-Entfernungsmessgeräts (1), in einen sicheren Zustand, insbesondere in einen ausgeschalteten Zustand.

7. Verfahren (100) nach einem der vorhergehenden Ansprüche,
**dadurch gekennzeichnet,**
**dass** das Verfahren (100), wenn das Prüfen (105) des Regelwertes eine Ungleichheit zwischen der ersten Prüfsumme und der zweiten Prüfsumme indiziert und/oder wenn das Prüfen des Stellwertes eine Ungleichheit zwischen der dritten Prüfsumme und der vierten Prüfsumme indiziert und/oder wenn das Prüfen des Sollwertes eine Ungleichheit zwischen der fünften Prüfsumme und der sechsten Prüfsumme indiziert, ferner umfasst:
- Initiieren einer Ausgabe, wobei die Ausgabe angibt, dass ein Fehler in dem technischen System (1) oder in der Regelung des technischen Systems (1) vorliegt.

8. Computerprogramm (20), umfassend Befehle, die bei der Ausführung des Computerprogramms (20) durch wenigstens einen Computer (10) diesen veranlassen, das Verfahren (100) nach einem der vorhergehenden Ansprüche auszuführen.

9. Laser-Entfernungsmessgerät (1), umfassend eine Software-Regelschleife (2) und/oder eine Hardware-Regelschleife (3), wobei das Laser-Entfernungsmessgerät eingerichtet ist, das Verfahren (100) nach einem der Ansprüche 2 bis 7 auszuführen.

10. Computerlesbares Speichermedium (15), umfassend Befehle, die bei der Ausführung durch wenigstens einen Computer (10) diesen veranlassen, die Schritte des Verfahrens (100) nach einem der Ansprüche 1 bis 7 auszuführen.
